# EUROPEAN PATENT APPLICATION

(11) **EP 1 895 352 A1**
(43) Date of publication of application: **05.03.2008**
(21) Application number: 06300909.6
(22) Date of filing: 31.08.2006
(51) Int. Cl.: G02F 1/13

(54) **A flat screen assembly with a housing having a front cover and a back cover**

(71) Applicant: TCL Thomson Electronics Europe SAS, 49002 Angers Cedex 01 (FR)
(72) Inventor: Allaire, Christian, 49800 LA DAGUENIERE (FR); Orcil, Bertrand, 49800 La Bohalle (FR); Oger, Laurent, 49070 St Lambert la Potherie (FR)

(57) **Abstract**

A known flat screen assembly comprises a flat screen panel (1), e.g. a LCD panel (1), a housing with at least a back cover (2) and a front cover (3) and with connection means with a plurality of members. To improve the flat screen assembly, the connection means are generated by at least one separate support element (10), which is able to be arranged between one of the two housing parts, the front cover (3) and the back cover (2), and the flat screen panel (1). In addition, the support element (10) is able to be connected to another of the two housing parts and, while connected, locks the one of the two housing parts and positions the flat screen panel (1).

## Description

### 1. Field of the invention.

The present invention is related to a flat screen assembly comprising a flat screen panel, a housing with at least a back cover and a front cover and with connection means. Flat screen assemblies which themselves comprise flat screens and housings, with at least a back cover and a front cover, are used for computers and TV apparatuses, in particular for portable computers and portable TV apparatuses.

### 2. Technological background.

A display apparatus with a display device and a cabinet, which comprises a rear part and a front part and also fastening means for fastening the front part to the rear part, is described by the WO 03/063476 A1. The fastening means of the cabinet comprises pairs of cooperating members of the front part and the rear part. At least one of the cooperating pairs has a resilient member, which is manually accessible and can be disengaged from its cooperating member. After being disengaged the front part and the rear part are separable. The cooperating members, of at least one of the pairs, are snap-ins. The display device is mounted in the cabinet and must be connected to the cabinet with additional connection means. As a result, numerous members, of the fastening means to fasten the cabinet itself, and of the connection means to fasten the display device into the cabinet, are necessary.

A further display apparatus, which is described in the US 2003/0227581 A1, comprises a front cover, a rear cover, a LCD panel and a panel supporting member. The panel supporting member is connected to the front cover, while the LCD panel is disposed in between the two. The rear cover is disposed in back of the panel supporting member and connected to the front cover. The display apparatus also includes numerous first snap pins protruding from the rear of the front cover. Each first snap pin has a first projection holder and a reinforcing member, which is engaged with the first projection holder. The reinforcing member is engaged with a first projection of a flange part formed on the panel supporting member. The display apparatus further comprises numerous second snap pins. Each second snap pin has a second projection holder which engages with a second projection formed on the rear cover.

In addition, the panel supporting member comprises a supporting projection on its inside surface, which faces toward the LCD panel to closely support the LCD panel. The supporting projection is made out of an elastic spring.

The numerous first snap pins with reinforcement members and of second snap pins results in a large operation expense. Specifically, the additional reinforcing members have to be manufactured and assembled.

A set gap between the LCD panel and the front and rear cover must be present in this arrangement. This gap requires a set width around the screen surface of the LCD panel.

A display device, wherein the number of parts is reduced, is described by the US 2001/0036057. The display device has a display module, in particular a liquid crystal module, which is disposed and anchored between a front cover and a back cover. A projection which projects towards the back cover is provided on the front cover. A hole, into which the projection is inserted, and a hook are provided at the liquid crystal module. By pressing the projection into the hole, the hook is deformed towards the back cover and engages a recess, which is provided at the back cover. When the front cover is placed on and aligned with the back cover, the projection is inserted into the hole. The liquid crystal module is anchored to the back cover by the hook engaging the recess. The front cover is anchored to the liquid crystal module by the projection being sandwiched between the hook and the chassis of the liquid crystal module.

This connection means, e.g. a plurality of projections, holes and recesses, are generated by the three parts, liquid crystal module, front and back cover, themselves. The efforts and costs to manufacture the three parts are high. In addition, the connection means can cause moulding defects, such as shrink marks, due to varying shrinking behaviours along the covers. In particular, e.g. the projections can cause moulding defects, on the front cover.

Since all projections must be inserted at the same time, the assembling process is rather difficult. Further, since the projection is only sandwiched between the hook and the chassis of the liquid crystal module, stability problems can arise. To ensure a set stability, it is described in the US 2003/0227581 A1 to increase the friction between the projection and the hook by providing roughened surfaces.

### 3. Summary of the invention.

It is therefore desirable to improve a flat screen assembly according to the preamble of claim 1, with respect to aesthetical aspects. Shrink marks should be avoided. The gap between the flat screen panel and the housing should be minimal.

According to the invention this can be achieved by the features of claim 1.

A flat screen assembly of the invention comprises a flat screen panel, a housing with at least a back cover and a front cover and with connection means, which are generated by at least one separate support element. The support element is able to be arranged at one of the two housing parts, the front cover and the back cover, and, at the same time, between the one housing part and the flat screen panel. It is able to be connected to another of the two housing parts and, while connected, locks the one of the two housing parts and positions the flat screen panel.

A separate support element helps achieve a minimal gap and, at the same time, avoid shrink marks on the housing. The aesthetical impression of the flat screen assembly is improved. The assembling process is simplified.

Possible advantageous developments of the invention are specified in the dependent claims.

While connected, the support element can advantageously be able to generate a force, directed in a transversal direction on the flat screen, e. g. in a direction perpendicular to the display surface of the flat screen panel, to position it.

The support element can have a first side, which is able to be arranged between the one of the two parts and the flat screen panel, and a second side piece which, when the support element is in this arrangement, extends over the flat screen panel.

The first side piece can comprise snapping means, at which the support element is able to be arranged at corresponding snapping means of the one of the two parts.

The snapping means of the support element can be manually accessible, e.g. by a clip. This improves the setup of the flat screen assembly and the after sale service.

One of the two side pieces can comprise fixing means, at which the support element is able to be fixed to corresponding fixing means of the other of the two parts.

The support element can comprise elastic means to position the flat screen panel.

The elastic means can be generated by at least one elastic element, which extends from the second side piece toward the flat screen panel. The elastic element can be a screw spring or a piece of elastic material. As an alternative, the elastic means can be generated by at least one elastic deformable plate. In particular, the elastic means can be generated by two elastic deformable side plates to distribute the force on the flat screen panel.

The connection means can be generated by at least two support elements, which are able to be arranged at two opposite sides of the flat screen panel. In particular, the connection means can be generated by two, four, six, eight, ten or more support elements. The greater the surface of the flat screen panel, the higher the number of support elements.

The present invention is especially useful for a flat screen assembly with a heavy flat screen panel and with the available screen size as the only size limit.

Advantageously, the one housing part can be generated by the front cover and the other housing part by the back cover.

### 4. Brief description of the drawings

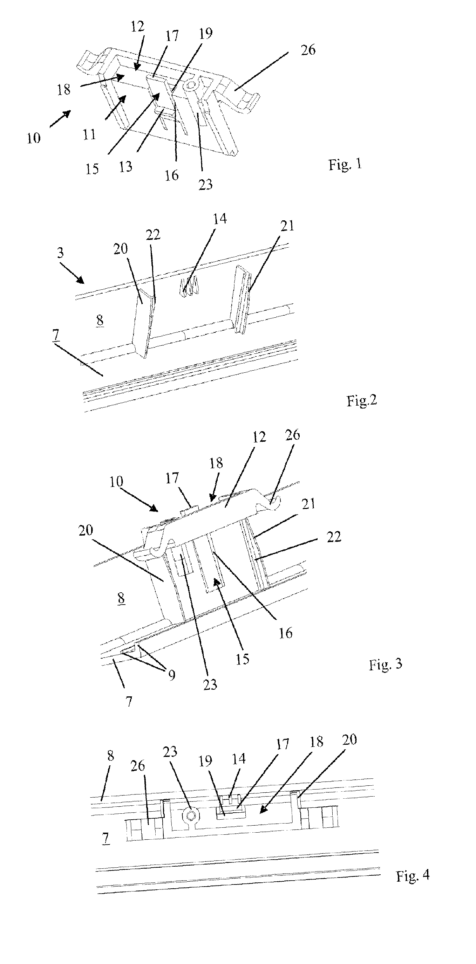

The invention will be explained in more detail using two embodiments, which is illustrated in figures 1 to 7.

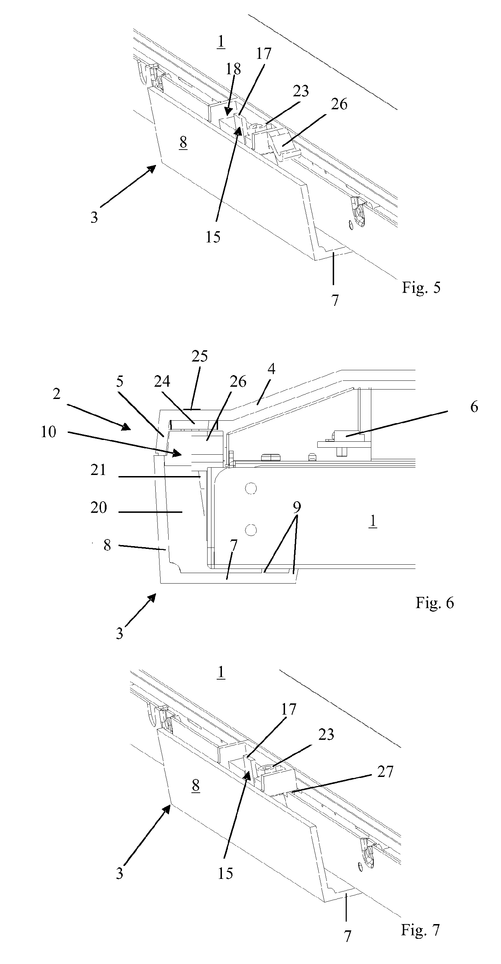

It shows:
■ Figure 1, a simplified perspective view of a support element according of the invention;
■ Figure 2, a cut-out of a simplified perspective view of front cover;
■ Figure 3, a cut-out of a simplified perspective view the support element being arranged at the front cover;
■ Figure 4, a cut-out of a simplified top view of the support element being arranged at the front cover;
■ Figure 5, a cut-out of a simplified perspective view of the support element being arranged between the front cover and the flat screen panel;
■ Figure 6, a simplified cross section of the embodiment of the invention at one side;
■ Figure 7, a cut-out of a simplified perspective view of the support element of the second embodiment of the invention according to figure 5.

### 5. Detailed description of the invention.

### Detailed description of the invention a first embodiment of the invention

A flat screen assembly of an embodiment of the invention comprises a flat screen panel, which is generated by a LCD panel 1, and a housing with at least a back cover 2 and a front cover 3. The arrangement of all three parts is seen in the partial view of the cross section in figure 6, which shows one of the four sides of the assembly.

The cavity-shaped back cover 2 comprises a bottom 4 and four side walls 5. The bottom 4 covers the rear of the LCD panel 1 and some further components 6, which are arranged at the rear of the LCD panel 1. The side walls 5 extend the components and all of them end close to the rear side of the LCD panel 1. The front cover 3 comprises a frame 7 and four side walls 8, which extend over the sides of the LCD panel 1. All side walls 8 fit with the corresponding side walls 5 of the back cover 2. As a result, all of the side walls 8 end close to the rear side of the LCD panel 1 and fit with the corresponding side walls 5 of the back cover 2.

The frame 7 frames the front side of the LCD panel 1 and fits with the front side of the LCD panel 1 with two path-formed projections 9 toward the LCD panel 1, one projection 9 located at the inner edge of the frame 7 and the other in a set distance from the inner edge.

According to the invention the flat screen assembly comprises at least one separate support element 10.

The support element 10 has a shape of an L with two side pieces 11, 12, which are arranged perpendicularly to each other. The first side piece 11, the longer side piece, is generated as a square and slim plate, which is able to be arranged between the front cover 3 and the LCD panel 1. The second side piece 12, the shorter side piece, is generated by an extension of the first side piece 11. The second side piece 12 extends at the top of the first side piece 12 in a right angle and, when the first side piece 11 is arranged between the front cover 3 and the LCD panel 1, extends over the LCD panel 1.

The first side piece 11 comprises snapping means, which are able to engage with corresponding snapping means of the front cover 3. The snapping means of the first side piece 11 are generated by a projection 13 and the snapping means of the front cover 3 are generated by a corresponding projection 14, which is formed by three right triangles on the side wall 8 of the front cover 3.

The first side piece 11 generates a clip 15, on which its projection 13 is located. The clip 15 extends in the middle of the plate of the first side piece 11 bottom-up from a region opposite to the second side piece 12 towards the second side piece 12, e.g. towards the top of the first side piece 11. A bottom end of the bar-shaped clip 15 is generated by the plate of first side piece 11. Its two parallel sides 16 are parallel to the sides of the first piece 11 and cut out of the plate. A top end 17 of the clip 15 is arranged in an opening 18 of the first piece 11 and in front of an opening 19 of the second side piece 12 in a way that the clip 15 with the projection 13 is able to be manually moved at its top end 17 into the opening 19. Due to this movement both of the projections 13, 14 can be disengaged and the support element 10 can be separated from the front cover 3. The snapping means of the support element 10 are manually accessible by the clip 15.

The front cover 3 comprises guiding means to guide the LCD panel 1 into the side walls 8 and onto the frame 7 of the front cover 3. The guiding means are generated by two plates 20, which extend from the side wall 8 bottom-up from the frame 7 to near the top of the side wall 8. The plates 20 have chamfers 21 to centre the LCD panel 1, when it is laid down on the frame 7.

The two plates 20 are arranged in a distance, which corresponds to the width of the support element 10. In addition, they are provided with guiding elements for the support element 10. The guiding elements are generated by tracks 22, which extend right-angled from the plates 20 parallel to the side wall 8. The tracks 22 of the two plates 21 are arranged vis-à-vis. The thickness of the first side piece 11 at its side edges corresponds to the distance between the side wall 8 and the tracks 22.

The first side piece 11 comprises fixing means and the back cover 2 comprises corresponding fixing means to connect the support element 11 and the back cover 2 to one another. The fixing means of the support 10 is generated by a screw boss 23, which is located at the top of the first side piece 11 beside the clip 15. The fixing means of the back cover 2 are generated by an opening with a washer 24 and by a screw 25. The support element 10 is able to be connected to the back cover 2 by the fixing means with this screw 25.

The second side piece 12 comprises elastic means to position the LCD panel 1, when the support element 10 is arranged between the front cover 3 and the LCD panel 1 and when the support element 10 is fixed to the back cover 2. The elastic means are generated by two elastic deformable side plates 26, which by prolonging the second side piece 12 at its two sides also extend the LCD panel 1. These borrow-shaped side plates 26 of the support element 10 generate a force directed in a transversal direction from the LCD panel 1, when the support element 10 is arranged between the front cover 3 and the LCD panel 1 and connected to the back cover 2. The side plates 22 are also used to compensate tolerances of the height of the LCD panel 1.

The projection 13 of the support element 10, which is engaged with the projection 14 of the front cover 3, locks the front cover 3, when the support element 10 is connected to the back cover 2. The back cover 2 comprises an ear, which is arranged at is inner surface over the clip 15, to anchor the top end 17 of the clip 15 and to secure the locking. The ear is not shown in the drawings.

The support element 10 and also the front and the back cover 3, 2 are manufactured by injection moulding. Each of them is manufactured as one piece.

The flat screen assembly of this embodiment is provided with an LCD panel 1 with a display surface of 42 inches, with ten support elements 10, which are distributed around the LCD panel 1, and with corresponding snapping means of the front cover 3 and with corresponding fixing means of the back cover 2.

In order to assemble the flat screen assembly, the LCD panel 1 is laid down between the side walls 8 onto the frame 7 of the front cover 3. It is guided and centred by the plates 20. Further, the support elements 10 are arranged between the front cover 3 and the LCD panel 1. The projections 13 of the first side pieces 11 engage with the corresponding projections 14 of the front cover 3. The second side pieces 12 with the side plates 26 extend over the LCD panel 1. Finally, the back cover 2 is connected to the support el ements 10 by the screws 25 and, as a result, to both of the LCD panel 1 and the front cover 3. The ears of the back cover 2 lock the manual accessible clips 15.

While connected, the projections 13 of the support elements 10 lock the front cover 3 and the side plates 26 position the LCD panel 1. A permanent contact between the front cover 3 and the LCD panel 1 is ensured. A fixation of the back cover at the rear of the LCD panel 1 is also ensured. In addition, the assembling process has been simplified.

### Detailed description of a second embodiment of the invention

The second embodiment corresponds to the first embodiment of the invention in all aspects but the elastic means. The elastic means are generated by at least one elastic element 27, which is arranged between the second side piece 12 and the LCD panel 1.

## Claims

1. A flat screen assembly comprising a flat screen panel (1), a housing with at least a back cover (2) and a front cover (3) and with connection means, **characterized in that**
the connections means are generated by at least one separate support element (10),
where each support element (10) is able to be arranged at one of the two housing parts, the front cover (3) and the back cover (2), and between the one housing part and the flat screen panel (1),
where each support element (10) is able to be connected to another of the two parts and where, while connected, each support element (10) locks the one of the two housing parts and positions the flat screen panel (1).

2. A flat screen assembly according to claim 1, **characterized in that**, while connected, the support element (10) is able to generate a force directed in a transversal direction on the flat screen panel (1), to position it.

3. A flat screen assembly according to claim 1 or 2, **characterized in that** the support element (10) has a first side piece (11), which is able to be arranged between the one of the two parts and the flat screen panel (1), and a second side piece (12) which, when the support element (10) is in this arrangement, extends over of the flat screen panel (1).

4. A flat screen assembly according to claim 3, **characterized in that** the first side piece (11) comprises snapping means, at which the support element (10) is able to be arranged at corresponding snapping means of the one of the two parts.

5. A flat screen assembly according to claim 4, **characterized in that** the snapping means of the support element are manually accessible.

6. A flat screen assembly according to one of the claims 3 to 5, **characterized in that** one of the two the side pieces (11, 12) comprises fixing means, at which the support element (10) is able to be connected to corresponding fixing means of the other of the two parts.

7. A flat screen assembly according to one of the claims 1 to 6, **characterized in that** the support element (10) comprises elastic means to position the flat screen panel (1).

8. A flat screen assembly according to claim 7, **characterized in that** the elastic means are generated by at least on elastic element(26, 27), which extends from the second side piece (12) towards the flat screen panel (1).

9. A flat screen assembly according to claim 7 or 8, **characterized in that** the elastic means are generated by at least one elastic deformable plate (26).

10. A flat screen assembly according to claim 9, **characterized in that** the elastic means are generated by two elastic deformable side plates (26).

11. A flat screen assembly according to one of the claims 1 to 10, **characterized in that** the connection means are generated by at least two support elements (10), which are able to be arranged at two opposite sides of the flat screen panel (1).

12. A flat screen assembly according to one of the claims 1 to 11, **characterized in that** the one housing part is generated by the front cover (3) and the other is generated by the back cover (2).
